# EUROPÄISCHE PATENTSCHRIFT

(11) **EP 0 649 356 B1**
(45) Veröffentlichungstag und Bekanntmachung des Hinweises auf die Patenterteilung: **27.11.1996**
(21) Anmeldenummer: 94914344.0
(22) Anmeldetag: 11.05.1994
(51) Int. Cl.: B22C 3/00, B22C 1/02

(54) **SCHLICHTE ZUR HERSTELLUNG VON FORMÜBERZÜGEN**
BLACK WASH FOR PRODUCING MOULD COATINGS
ENDUIT PERMETTANT DE REVETIR LA SURFACE DE MOULES

(30) Priorität: 17.05.1993 DE 9307468 U
(43) Veröffentlichungstag der Anmeldung: 26.04.1995
(73) Patentinhaber: Hüttenes-Albertus Chemische-Werke GmbH, D-40549 Düsseldorf (DE)
(72) Erfinder: BARTSCH, Dietmar, D-30880 Laatzen (DE); SEEGER, Klaus, D-30173 Hannover (DE); KAISER, Hans-Dieter, D-31303 Burgdorf (DE)
(74) Vertreter: Eikenberg, Kurt-Rudolf, Dr. Dipl.-Chem.
(86) Internationale Anmeldenummer: DE9400555
(87) Internationale Veröffentlichungsnummer: WO9426440

(56) Entgegenhaltungen:
- DD-A- 98 625
- DE-A- 3 525 847
- DE-A- 3 720 878
- DE-C- 4 203 904
- DERWENT ACCESSION no. 79-671 80B, Questel Telesystems (WPIL) DERWENT PUBLICATIONS LTD., London; & JP, A, 54-099 732 (FUKUSHIMA SEIKO)

## Beschreibung

Die Erfindung betrifft eine Schlichte oder allgemein einen Formüberzugsstoff, der in der Gießereitechnik zur Beschichtung von Gießerei-Formteilen wie Formen, Kernen und Modellen eingesetzt wird.

Gebrauchsfertige Schlichten sind Suspensionen von feinkörnigen fernerfesten bis hoch-feuerfesten anorganischen Materialien in einer Trägerflüssigkeit, die durch ein dem jeweiligen Anwendungsfall angepaßtes Auftragsverfahren, beispielsweise durch Streichen, Spritzen, Gießen oder Tauchen auf die Formteile aufgebracht werden, dort trocknen und damit den gewünschten Überzug bilden.

Die feinkörnigen feuerfesten bis hoch-feuerfesten anorganischen Materialien stellen den gießtechnisch zweckbestimmenden Bestandteil einer Schlichte dar. Sie werden auch als "Grundstoffe" bezeichnet und sind mit Hilfe von Suspensionsmitteln in der Trägerflüssigkeit suspensiert. In der Trägerflüssigkeit sind weiterhin noch Bindemittel gelöst, die zur Fixierung der Grundstoff-Teilchen auf der Formteiloberfläche nach dem Entfernen der Flüssigkeit dienen. Bei Bedarf können auch noch Netzmittel, Entschäumer und Bakterizide hinzukommen.

Typische Beispiele für Grundstoffe umfassen (einzeln oder im Gemisch miteinander) mineralische Oxide wie Korund, Magnesit, Mullit, Quarz und Chromit, weiterhin auch Silikate wie Zirkonsilikat, Olivin und Schamotte und außerdem auch Koks und Graphit. Als Suspensionsmittel werden quellbare Schichtsilikate oder Cellulosederivate eingesetzt, die zur Einlagerung von Wasser befähigt sind. Die Trägerflüssigkeit kann Wasser sein oder ein Lösungsmittel wie Leichtbenzin, Methanol, Ethanol, Isopropanol oder Isobutanol, und als Bindemittel kommen Stärkederivate wie Dextrine, Ligninderivate wie Ligninsulfonate, Naturharze, Kunstharze oder Kunststoffe wie PVA in Betracht, wobei die Bindemittel entsprechend ihrer Löslichkeit in der Trägerflüssigkeit ausgewählt werden.

Die Schlichten sollen in der Gießereitechnik folgende Aufgaben erfüllen:
1. Verbesserung der Gußoberfläche bezüglich ihrer Glätte.
2. Saubere Trennung von flüssigem Metall und Formteil.
3. Vermeidung von Oberflächenfehlern, wie z.B. Gasblasen, Blattrippen, Schülpen, Penetration oder Vererzungen.
4. Beeinflussung der Gußrandzone durch metallurgisch wirksame Stoffe.

Die Aufgaben 1 und 2 lassen sich in der Regel durch die Kombination verschiedener geeigneter Grundstoffe gut erfüllen, und die Aufgabe 4 stellt nur ein Randgebiet dar, denn metallurgisch wirksame Schlichten, z.B. mit Schwefel, werden nur partiell eingesetzt. Hinsichtlich der Aufgabe 3 besteht jedoch noch Handlungsbedarf.

Die Aufgabe 3 hat heute und in Zukunft eine zunehmende Bedeutung, weil alle kunstharzgebundenen Sandformen und Kerne bei hoher Temperatur infolge der Sandausdehnung aufreißen und die Schmelze dann in die Form oder den Kern eindringt. Die Beseitigung der daraus resultierenden Oberflächenfehlstellen vom Gußstück ist sehr schwierig und zeitaufwendig.

Es wurden bereits Formüberzugsstoffe entwickelt und eingesetzt, die diesen Fehlern entgegenwirken und die beispielsweise in den Literaturstellen J. *Levelink, Gießerei, Jahrgang 66; 1979 S. 456-458* sowie *D. Bartsch, Report of Technical Forum, 58th World Foundry Congress. Krakau 1991*, beschrieben sind.

Die Wirkungsweise solcher Überzüge beruht darauf, daß plättchenförmige Schichtsilikate wie Kaolinit, Pyrophillit, Talkum und Glimmer als Grundstoff eingesetzt werden, die sich bei der Einwirkung von Zugspannung besser verformen lassen. Darüber hinaus werden die Mineralstoffe so kombiniert, daß sich temporäre Erweichungsphasen bilden, was ebenfalls die Verformbarkeit des Überzuges verbessert.

Als Nachteil hat sich jedoch herausgestellt, daß diese Überzüge über eine sehr dichte Textur verfügen und somit keine ausreichende Durchlässigkeit für Gase, die bei der thermischen Zersetzung der Bindemittel der Sandformen entstehen, gegeben ist. Die Folge davon ist, daß sich in der Form und/oder im Kern ein hoher Gasdruck aufbaut, der, sobald er den metallostatischen Gegendruck übersteigt, zum Kochen des Metalles und zu Gasblasen führt. Außerdem können durch den Druckanstieg auch Teile des überzuges abplatzen, die sich dann als Einschluß im Gußstück wiederfinden.

Mit der Erfindung soll nun eine verbesserte Schlichte zur Verfügung gestellt werden, welche die vorangehend beschriebenen Mängel vermeidet und bei unverändert guten gießtechnischen Eigenschaften die Herstellung von überzügen mit hoher Gasdurchlässigkeit erlaubt. Dieses Ziel wird erfindungsgemäß dadurch erreicht, daß die Schlichte zusätzlich zu dem feinkörnigen bzw. plättchenförmigen Grundstoff-Material noch einen Gehalt an anorganischen Hohlkugeln aufweist, und zwar in einer Menge von 1 - 40 Gew.%, bezogen auf die gebrauchsfertige Schlichte.

Unter dem Begriff "anorganische Hohlkugeln" sind kleine gasgefüllte Hohlkügelchen mit einem Durchmesser in der Größenordnung von 5 - 500 µm (bevorzugt 60 - 250 µm) zu verstehen, deren Schale aus Silikaten insbesondere des Aluminiums, Calciums, Magnesiums und/oder Zirkons, aus Oxiden wie Aluminiumoxid, Quarz, Magnesit, Mullit, Chromit, Zirkonoxid und/oder Titanoxid, aus Boriden, Carbiden und Nitriden wie Siliciumcarbid, Titancarbid, Titanborid, Bornitrid und/oder Borcarbid, aus Kohlenstoff, Glas oder auch Metallen wie z.B. Kupfer besteht und deren Gasfüllung normalerweise ein Gemisch inerter Gase ist, beispielsweise bestehend aus 70 % CO₂ und 30 % N₂. Diese Hohlkugeln sind in neuerer Zeit entwickelt worden und finden insbesondere Verwendung als Leichtfüllstoff von Kunststoffen.

Bei einem sehr hohen Gehalt der Schlichte an Hohlkugeln kann sich unter Umständen eine verminderte Festigkeit der gebildeten überzüge ergeben. Um dem entgegenzuwirken, wird im weiteren Verfolg des Erfindungsgedankens vorgeschlagen, der Schlichte zusätzlich zu den Hohlkugeln noch eine geringe Menge an dünnen kurzen Fasern beizufügen. Dabei handelt es sich um Fasern mit einem Durchmesser von 1 - 30 µm (vorzugsweise 3 - 10 µm) und einer Länge von 10 - 5000 µm (vorzugsweise 100 - 500 µm), wobei anorganische Fasern z.B. aus Aluminiumsilikaten, Zirkonoxid, Aluminiumoxid, Titanoxid, Kohlenstoff, Siliciumcarbid, Titancarbid, Titanborid, Bornitrid, Borcarbid, Glas, Basalt und Mineralwolle ebenso zum Einsatz kommen können wie Fasern aus organischem Material. Bei den organischen Fasern kann es sich um Kunststoff-Fasern aller Art handeln oder um natürliche Fasern wie z.B. Cellulosefasern.

Aus dem Abstract der JP-A-54099732 (Derwent Accession no. 79-671 80B) ist eine Gießform bekannt, deren Innenwandung abschnittsweise mit einer Schicht aus Zirkonium-Hohlkugeln belegt ist, welche durch eine Wasserglasbindung zusammengehalten werden.

Aus den DE-C 35 25 847 und DE-C 42 03 904 ist es bekannt, Schlichten mit einem Gehalt an Fasern zu versehen, um eine kurze Trocknungszeit ohne Rißbildung und eine erhöhte Biegefestigkeit der überzüge zu erreichen, wobei gemäß der DE-C 42 03 904 insbesondere durch organische Fasern auch eine erhöhte Gasdurchlässigkeit erreichbar ist.

Allerdings haben Fasern im Vergleich zu Hohlkugeln den erheblichen Nachteil, daß sie sich nicht problemlos in Schlichten einbringen lassen und daß auch die Verarbeitbarkeit solcher Schlichten schlechter ist. So sind beim Einbringen von Fasern hohe Scherkräfte notwendig, um eine ausreichende Gleichverteilung zu gewährleisten, denn Fasern neigen zur Knäuelbildung. Außerdem ist beim Verarbeiten von faserhaltigen Schlichten ein glatter Auftrag kaum möglich, weil z.B. beim Streichen die Fasern durch die Pinselborsten mitgezogen werden. Aus diesem Grunde werden bei der Erfindung nur geringe Mengen an Fasern eingesetzt, und das auch nur dann, wenn auf andere Weise keine ausreichende Festigkeit des überzugs erzielt werden kann.

Es wurde gefunden, daß sich die Gasdurchlässigkeit von Schlichteüberzügen ohne Beeinträchtigung der gewünschten gießtechnischen Eigenschaften erheblich verbessern läßt, wenn die Schlichte einen Anteil an diesen Hohlkugeln enthält, ggfs. mit Zusatz kleiner Mengen an Fasermaterialien. Damit gelingt die Beseitigung der eingangs beschriebenen Mängel, ohne daß dadurch andere Nachteile in Kauf genommen werden müssen. Die Hohlkugeln lassen sich aufgrund ihrer Gestalt problemlos in Schlichten einbringen, und die Verarbeitbarkeit solcher Schlichten entspricht der von herkömmlichen Schlichten, wobei sogar noch eine vorteilhaft verkürzte Trocknungszeit der überzüge festgestellt werden konnte.

Von dem bisherigen Einsatzgebiet der Hohlkugeln her gesehen war ein solches Ergebnis nicht zu erwarten, zumal es bei einer Schlichte nicht primär auf die Eigenschaft der Hohlkugeln als Leichtfüllstoff ankommt. Vielmehr sind die kleinen Kügelchen in mehrfacher anderer Hinsicht wirksam. So wird die dichte Packung der Grundstoff-Teilchen in dem Überzug, die als Hauptursache für die schlechte Gasdurchlässigkeit angesehen werden kann, durch die Kügelchen aufgelockert und schon dadurch gasdurchlässiger gemacht. Wie weiter unten anhand von Beispielen gezeigt wird, besitzt eine erfindungsgemäß aufgebaute Schlichte im trockenen, noch nicht abgegossenen Zustand eine deutlich verbesserte Gasdurchlässigkeit im Vergleich zu einer Schlichte ohne Hohlkugeln, aber sonst gleicher Zusammensetzung.

Zu Beginn des Gußvorgangs bewirken die isolierenden Eigenschaften der Hohlkugeln sowie der gasdurchlässigen Überzüge einen verzögerten Wärmedurchgang durch die Schlichte in den Formstoff. Später schmelzen die Hohlkugeln in der Gießhitze und/oder zerbrechen unter dem Gießdruck, wodurch in dem Schlichte-Überzug zahlreiche Mikro-Fehlstellen entstehen, durch die der Überzug eine außerordentlich hohe Gasdurchlässigkeit bekommt, ohne für das Gießmetall durchlässig zu werden.

Ein vorteilhafter Nebeneffekt des Schmelzens und/oder Zerbrechens der Hohlkugeln besteht im übrigen noch darin, daß die inerte Gasfüllung der Kugeln freigesetzt wird und eine Schutzgasfunktion übernimmt, welche die Metalloberfläche gegen Oxidation schützt.

Die Erfindung ist universell bei allen Arten von Schlichten einsetzbar. Sie hat besondere Bedeutung bei denjenigen Schlichten, die plättchenförmige Grundstoffteilchen enthalten, und ist für die praktische Verwendbarkeit solcher Schlichten nahezu unverzichtbar. Aber auch bei anderen Schlichten kommen die Vorteile der Erfindung zum Tragen, denn auch die feinkörnigen Grundstoffteilchen herkömmlicher Schlichten können verhältnismäßig dichte Packungen bilden, weil die Körner meistens eine eckige bis splittrige Gestalt haben.

Zusammenfassend wird durch die Erfindung eine Schlichte geschaffen, die für alle Einsätze geeignet ist und es gestattet, mit Hilfe von Fasern und Hohlkugeln oder allein von Hohlkugeln die Gasdurchlässigkeit und mechanische Festigkeit der überzüge an die Erfordernisse der Gießverfahren anzupassen, wobei die Trocknungsgeschwindigkeit erhöht wird und eine gute Verformbarkeit und glatte Oberflächen gewährleistet bleiben.

Die nachfolgenden Beispiele erläutern die Erfindung.

### Beispiele A - D gemäß Tabelle 1

Es wurden folgende vier Wasserschlichten bereitgestellt, die bei sonst gleicher Zusammensetzung einen unterschiedlichen Gehalt an Hohlkugeln und ggfs. Fasern enthielten:

| | **Hohlkugeln** | **Fasern** |
|---|---|---|
| Schlichte A | keine | keine (Vergleichsbeispiel) |
| Schlichte B | 10 Gew.% | keine |
| Schlichte C | 5 Gew.% | 1 Gew.% |
| Schlichte D | 10 Gew.% | 1 Gew.% |

### Beispiele E - G gemäß Tabelle 2

Analog Beispielen A - D wurden folgende drei Alkoholschlichten bereitgestellt:

| | **Hohlkugeln** | **Fasern** |
|---|---|---|
| Schlichte E | keine | keine (Vergleichsbeispiel) |
| Schlichte F | 10 Gew.% | keine |
| Schlichte G | 4 Gew.% | 1 Gew.% |

In allen Fällen wurden als Hohlkugeln solche aus Aluminiumsilikat eingesetzt, deren Teilchengröße zu 80 % zwischen 250 - 90 µm lag. Bei den Fasern handelte es sich um Aluminiumsilikat-Fasern mit einem mittleren Durchmesser von 3 µm und einer Länge von < 3 mm.

Zur Prüfung der Gasdurchlässigkeit wurden die Schlichten A - F auf Siebträger aufgebracht, und dann wurde ihre Gasdurchlässigkeit mit einem Prüfgerät +Georg Fischer+ ermittelt, indem Luft mit vorgegebenem Druck durch die Proben gepreßt und die in der Zelteinheit hindurchgegangene Luftmenge gemessen wurde.

Die Meßergebnisse sind in den Tabellen 1 und 2 angegeben, und zwar als Relativwert, bezogen auf die Schlichte A als Basis. Es ist zu erkennen, daß die relative Gasdurchlässigkeit aller erfindungsgemäßen Schlichten deutlich oberhalb von 1 liegt, also gegenüber der Schlichte A deutlich verbessert ist. So steigt z.B. bei der Zugabe von 10 % Aluminiumsilikathohlkugeln (Schlichte B) die Gasdurchlässigkeit des Schlichteüberzugs um 280 % an. Die Verarbeitungseigenschaften dieser Schlichte sind gut. Bei der weiteren Zugabe von 1 % Keramikfasern (Schlichte D), hat die Schlichteschicht eine gute Festigkeit auf kunstharzgebundenen Kernen. Vergleichbare Steigerungen der Gasdurchlässigkeiten werden bei den Alkoholschlichten F und G beobachtet. Daß sich die Gasdurchlässigkeit der Schlichteschichten durch den erfindungsgemäßen Einsatz der Hohlkugel / Hohlkugeln und Fasermaterialien stark erhöht, wird auch im Gußverhalten beobachtet.

In der beigefügten Grafik ist die Gasdruckkurve eines mit einem konventionell aufgebauten überzugsstoff (Schlichte A) geschlichteten Coldbox-Kernes im Vergleich zu einem ungeschlichteten Kern (O) dargestellt. Die Ermittlung erfolgte mit zylindrischen Coldbox-Kernen, die in eine Eisenschmelze von ca. 1430 °C getaucht wurden. Der im Kern entstehende Gasdruck wurde in Abhängigkeit von der Tauchzeit gemessen und ist in Zentimeter Eisensäule angegeben. Beim geschlichteten Kern tritt nach einem Anfangsmaximum noch ein zweites Gasdruckmaximum zu einem späteren Zeitpunkt auf, während beim ungeschlichteten Kern nur ein Anfangsmaximum und zwei kleinere weitere Druckmaxima beobachtet werden. (Der ungeschlichtete Kern hat die maximal mögliche höchste Gasdurchlässigkeit).

Weiterhin ist in der Grafik die Gasdruckkurve eines erfindungsgemäßen Überzugsstoffes (Schlichte C) dargestellt. Es wird nur noch ein hohes Anfangsdruckmaximum beobachtet. In den kritischen Zeitpunkten während des Gießens und Erstarrens baut sich hier kein hoher Gasdruck mehr auf. Die zuvor beschriebenen Fehler, wie Gasblasen und Einschlüsse im Gußstück, treten nicht auf.

In der Bewertung von Gußstückoberflächen bezüglich der genannten Anforderung an Schlichten (Punkt 2 u. 3) zeigen die erfindungsgemäßen Schlichten ein hervorragendes Ergebnis. Die Vorteile beim Einsatz von Hohlkugeln bzw. Hohlkugeln und Fasern in Schlichten sind auf die relevanten Eigenschaften der Hohlkugeln für den Gußprozeß zurückzuführen.

**Tabelle 1**

| Wasserschlichten mit verschiedenen Hohlkugeln- / Faseranteilen | | | | |
|---|---|---|---|---|
| Schlichte Substanz (Anteil in Gew.%) | A | B | C | D |
| Wasser | 50,3 | 40,3 | 44,3 | 39,3 |
| Al-Silikate | 39,0 | 39,0 | 39,0 | 39,0 |
| Graphit | 4,0 | 4,0 | 4,0 | 4,0 |
| Tonmineral | 4,0 | 4,0 | 4,0 | 4,0 |
| Eisenoxid | 1,0 | 1,0 | 1,0 | 1,0 |
| Dextrine | 0,65 | 0,65 | 0,65 | 0,65 |
| Netzmittel | 0,8 | 0,8 | 0,8 | 0,8 |
| Konservierungsmittel | 0,25 | 0,25 | 0,25 | 0,25 |
| Fasern | 0 | 0 | 1 | 1 |
| Hohlkugeln | 0 | 10 | 5 | 10 |
| | 100 % | 100 % | 100 % | 100 % |
| Relative Gasdurchlässigkeit (bezogen auf Schlichte A) | 1 | 3,8 | 3,4 | 5,7 |

**Tabelle 2**

| Alkoholschlichten mit verschiedenen Hohlkugeln- / Faseranteilen | | | |
|---|---|---|---|
| Schlichte Substanz (Anteil in Gew.%) | E | F | G |
| Alkohol | 49,5 | 49,5 | 49,5 |
| Al-Silikate | 38,4 | 28,4 | 33,4 |
| Wasser | 6,2 | 6,2 | 6,2 |
| Bentonit | 3,1 | 3,1 | 3,1 |
| Eisenoxid | 2 | 2 | 2 |
| Kunstharz | 0,8 | 0,8 | 0,8 |
| Fasern | 0 | 0 | 1 |
| Hohlkugeln | 0 | 10 | 4 |
| | 100 % | 100 % | 100 % |
| Relative Gasdurchlässigkeit (bezogen auf Schlichte A) | 1,2 | 13,8 | 6,8 |

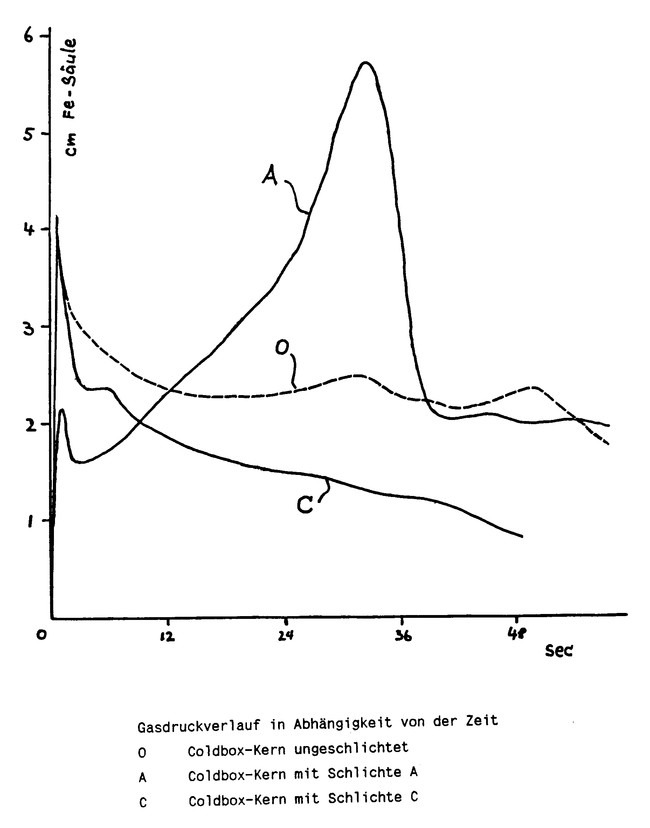

## Patentansprüche

1. Schlichte zur Herstellung von Formüberzügen, deren zweckbestimmender Hauptbestandteil aus feinteiligen feuerfesten bis hochfeuerfesten anorganischen Materialien besteht, gekennzeichnet durch einen Gehalt an anorganischen Hohlkugeln in einer Menge von 1 - 40 Gew.%, bezogen auf die gebrauchsfertige Schlichte.

2. Schlichte zur Herstellung von Formüberzügen nach Anspruch 1, dadurch gekennzeichnet, daß die Hohlkugeln aus Silikaten insbesondere des Aluminiums, Calciums, Magnesiums und/oder Zirkons, aus Oxiden wie Aluminiumoxid, Quarz, Magnesit, Mullit, Chromit, Zirkonoxid und/oder Titanoxid, aus Boriden, Carbiden und Nitriden wie Siliciumcarbid, Titancarbid, Titanborid, Bornitrid und/oder Borcarbid, aus Kohlenstoff, Glas oder Metallen bestehen oder Mischungen dieser Hohlkugeln sind.

3. Schlichte zur Herstellung von Formüberzügen nach Anspruch 1 dadurch gekennzeichnet, daß die Hohlkugeln gasgefüllt sind und einen Durchmesser von 1 - 500 µm, bevorzugt 60 - 250 µm aufweisen.

4. Schlichte zur Herstellung von Formüberzügen nach einem der Ansprüche 1 - 3, gekennzeichnet durch einen zusätzlichen Gehalt an anorganischen und/oder organischen Fasern in einer Menge von 0,1 - 10 Gew.%, bezogen auf die gebrauchsfertigen Formschlichten.

5. Schlichte zur Herstellung von Formüberzügen nach Anspruch 4, dadurch gekennzeichnet, daß die anorganischen Fasern aus Aluminiumsilikaten, Aluminiumoxid, Zirkonoxid, Titanoxid, Kohlenstoff, Siliciumcarbid, Titancarbid, Titanborid, Bornitrid, Borcarbid, Glas, Basalt oder Mineralwolle bestehen, oder Mischungen dieser Fasern sind.

6. Schlichte zur Herstellung von Formüberzügen nach Anspruch 4 oder 5, dadurch gekennzeichnet, daß die organischen Fasern aus Cellulose, Nylon, Polyethylen, Vinylacetat oder Polyester bestehen, oder Mischungen dieser Fasern sind.

7. Schlichte zur Herstellung von Formüberzügen nach einem der Ansprüche 4 - 6, dadurch gekennzeichnet, daß die Fasern einen Durchmesser von 1 - 30 µm, vorzugsweise 3 - 10 µm haben und eine Länge von 10 - 5000 µm, vorzugsweise 100 - 500 µm.

## Claims

1. Refractory wash for producing mould coatings, whose main component determining the function is composed of finely divided refractory to highly refractory inorganic materials, characterized by a content of inorganic hollow spheres in an amount of 1-40% by weight, based on the ready-to-use refractory wash.

2. Refractory wash for producing mould coatings according to Claim 1, characterized in that the hollow spheres are composed of silicates, in particular of aluminium, calcium, magnesium and/or zirconium, of oxides such as aluminium oxide, quartz, magnesite, mullite, chromite, zirconium oxide and/or titanium oxide, of borides, carbides and nitrides such as silicon carbide, titanium carbide, titanium boride, boron nitride and/or boron carbide, of carbon, glass or metals, or are mixtures of these hollow spheres.

3. Refractory wash for producing mould coatings according to Claim 1, characterized in that the inorganic gas-filled hollow spheres have a diameter of 1-500 µm, preferably 60-250 µm.

4. Refractory wash for producing mould coatings according to one of Claims 1-3, characterized by an additional content of inorganic or organic fibres in an amount of 0.1-10% by weights based on the ready-to-use mould coating material.

5. Refractory wash for producing mould coatings according to Claim 4, characterized in that the fibres are inorganic fibres composed of aluminium silicates, aluminium oxide, zirconium oxide, titanium oxide, carbon, silicon carbide, titanium carbide, titanium boride, boron nitride, boron carbide, glass, basalt or mineral wool, or are mixtures of these fibres.

6. Refractory wash for producing mould coatings according to Claim 4 or 5, characterized in that the fibres are organic fibres composed of cellulose, nylon, polyethylene, vinyl acetate or polyester, or are mixtures of these fibres.

7. Refractory wash for producing mould coatings according to one of Claims 4-6, characterized in that the fibres have a diameter of 1-30 µm, preferably 3-10 µm, and a length of 10-5000 µm, preferably 100-500 µm.

## Revendications

1. Enduit pour la fabrication de revêtements de moules dont le constituant principal déterminant le but est constitué par des matériaux anorganiques à fines particules réfractaires à très réfractaires, caractérisé par un taux de sphères creuses anorganiques d'une quantité d'1 à 40 % on poids par rapport à l'enduit prêt à l'emploi.

2. Enduit pour la fabrication de revêtements de moules selon la revendication 1, caractérisé on ce que les sphères creuses sont constituées par des silicates, en particulier d'aluminium, de calcium, de magnésium et/ou de zircone, des oxydes comme l'oxyde d'aluminium, le quartz, la magnésite, le mullite, le chromite, le chromite, l'oxyde de zirkone et/ou l'oxyde de titane, dos borures, des carbures et des nitrures comme le carbure de silice, le carbure de titane, le borure de titane, le nitrure de bore et/ou le carbure de bore, par le carbone, le verre ou des métaux, ou des mélanges de ces sphères creuses.

3. Enduit pour la fabrication de revêtements de moules selon la revendication 1, caractérisé en ce que les sphères creuses sont remplies de gaz et ont un diamètre d'1 à 500 µm, de préférence de 60 à 250 µm.

4. Enduit pour la fabrication de revêtements de moules selon l'une des revendications 1 à 3, caractérisé par un taux supplémentaire de fibres anorganiques et/ou organiques d'une quantité de 0,1 à 10 % en poids par rapport aux enduits de moules prêts à l'emploi.

5. Enduit pour la fabrication de revêtements de moules selon la revendication 4, caractérisé an ce que les fibres anorganiques sont constituées par des silicates d'aluminium, de l'oxyde d'aluminium, de l'oxyde de zirkone, de l'oxyde de titane, du carbone, du carbure de silice, du carbure de titane, du borure de titane, du borure de titane, du nitrure de bore, du carbure de bore, du basalte ou de la laine minérale, ou des mélanges de ces fibres.

6. Enduit pour la fabrication de revêtements de moules selon la revendication 4 ou 5, caractérisé en ce que les fibres organiques sont constituées par de la cellulose, du nylon, du polyéthylène, de l'acétate de vinyle ou du polyester, ou des mélanges de ces fibres.

7. Enduit pour la fabrication de revêtements de moules selon l'une des revendications 4 à 6, caractérisé en ce que les fibres ont un diamètre d'1 à 30 µm, de préférence 3 à 10 µm, et une longueur de 10 à 5000 µm, de préférence 100 à 500 µm.
